# EUROPEAN PATENT APPLICATION

(11) **EP 1 496 708 A1**
(43) Date of publication of application: **12.01.2005**
(21) Application number: 04015912.1
(22) Date of filing: 06.07.2004
(51) Int. Cl.: H04N 7/64

(54) **Moving-picture encoding apparatus, moving-picture encoding methods, and moving-picture encoding programs**

(30) Priority: 08.07.2003 JP 2003193877
(71) Applicant: NTT DoCoMo, Inc., Tokyo 100-6150 (JP)
(72) Inventor: Boon, Choong Seng c/o NTT DoCoMo, Inc., Chiyoda-ku, Tokyo 100-6150 (JP); Sugimoto, Kazuo c/o NTT DoCoMo, Inc., Chiyoda-ku, Tokyo 100-6150 (JP)
(74) Representative: Grosse, Wolfgang, Dipl.-Ing.

(57) **Abstract**

A moving-picture encoding apparatus according to the present invention has input means for input of an image; image encoding means with an error resilience tool for dividing the input image into a plurality of regions and encoding each of the regions in an order other than a scan order of the image; storing means for storing compressed data encoded by the image encoding means; sending means for sending the compressed data to the outside; and determining means for determining a first mode of outputting the compressed data to the sending means or a second mode of outputting the compressed data to the storing means, and for determining such an encoding condition as to turn on the error resilience tool in the case of the first mode or as to turn off the error resilience tool in the case of the second mode; wherein the encoding is carried out according to the encoding condition determined in this manner, the compressed data is transmitted to the sending means in the case of the first mode, and the compressed data is stored into the storing means in the case of the second mode.

## Description

### BACKGROUND OF THE INVENTION

### Field of the Invention

The present invention relates to moving-picture encoding methods, moving-picture encoding apparatus, and moving-picture encoding programs and, more particularly, to efficient encoding methods according to types of usage.

### Related Background Art

In recent years, video communication terminals with a video interface such as camera-equipped cell phone, video telephony are widely spreading at high speed. These video communication terminals, when used as video cameras or the like, are able to store moving-picture data taken by the camera, to reproduce the data to browse it later on, and to transmit the data as attached to mail. When they are used as video phones or the like, they transmit or receive the moving-picture data via a communication path. The video communication terminals permitting browsing of moving-picture data are also able to receive and browse the moving-picture data through the Internet or the like by streaming or downloading.

The compression encoding technology of moving picture signals is used in order to efficiently perform the transmission and storage of moving-picture data with high quality. An example of the known technology for that purpose is a moving-picture encoding system scheduled for joint international standardization by ITU-T and ISO/IEC, ITU-T Recommendation H.264 or ISO/IEC International Standard 14496-10 (hereinafter referred to as H.264).

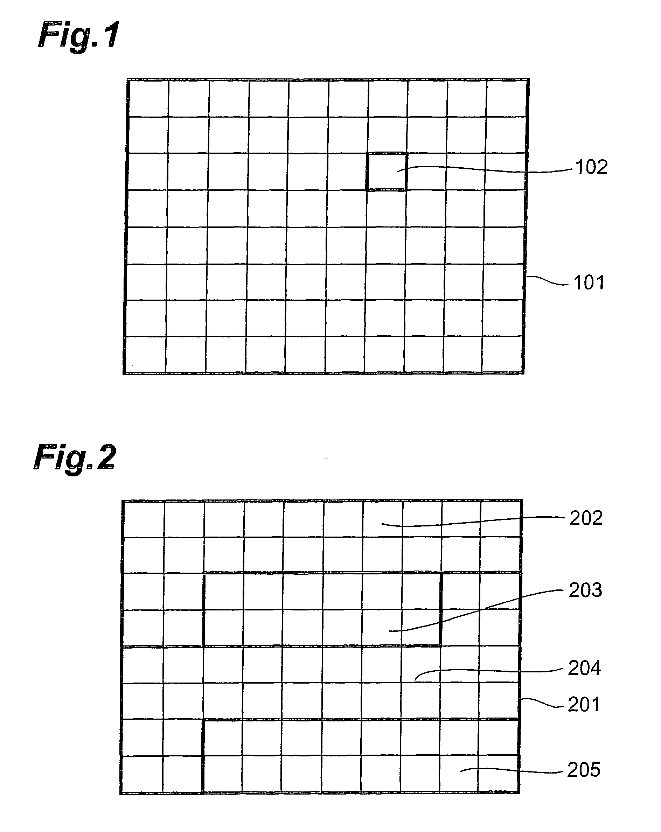

In H.264, as shown in Fig. 1, image data of one frame is divided into regions called macroblocks, and an encoding process is carried out for each macroblock unit (in Fig. 1, a frame image 101 is divided into a plurality of macroblocks 102). Intra frame coding is a predictive encoding method of encoding a macroblock, using encoding information of surrounding macroblocks in an encoding target frame. Inter frame coding is a predictive encoding method of encoding a macroblock by obtaining differences between an original image and a motion predicted image generated by motion prediction with reference to a reference image of another frame previously encoded, and performing the encoding using encoding information of surrounding macroblocks in an encoding target frame. Furthermore, there is provided a function of implementing a deblocking filter for a purpose of removal of noise such as block distortion with respect to a reference image used on the occasion of inter frame coding (an intra-loop filter), and the image quality and compression rate are improved by application of the deblocking filter.

During transmission of compressed encoded data through a communication path, errors can be mixed into the data in the communication path. The possibility of mixture of errors is higher, particularly, in radio links than in wire lines. Where errors are mixed in compressed encoded data, it can result in failure in synchronization of codes thereafter and going into a state of being incapable of continuation of normal decoding.

In H.264, as shown in Fig. 2, there is provided a function of independently encoding each slice unit consisting of one macroblock or plural macroblocks (in Fig. 2, a frame image 201 contains four slices 202-205). Each slice is composed of a slice header and one or more macroblocks, and each macroblock in a slice is encoded without prediction using information of macroblocks belonging to the other slices. Therefore, even if an error is mixed into compressed encoded data of a certain frame, macroblocks after a slice starting from a slice header detected next in that frame can be normally decoded without being affected by the error.

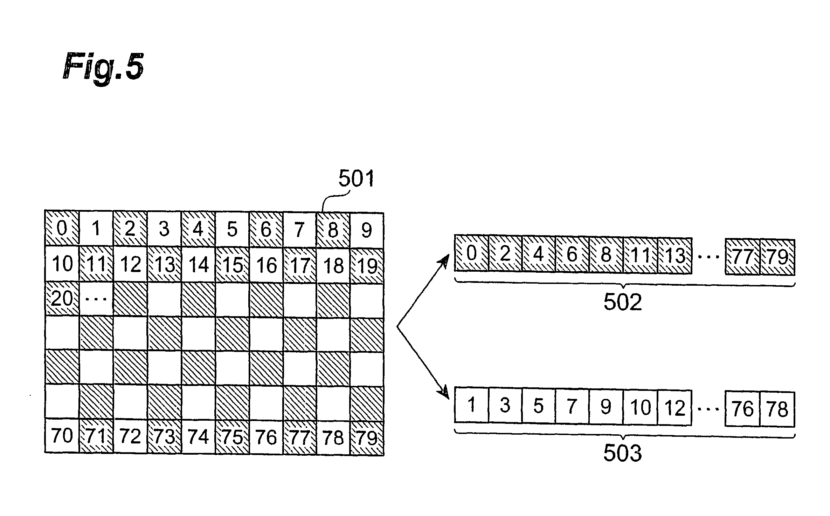

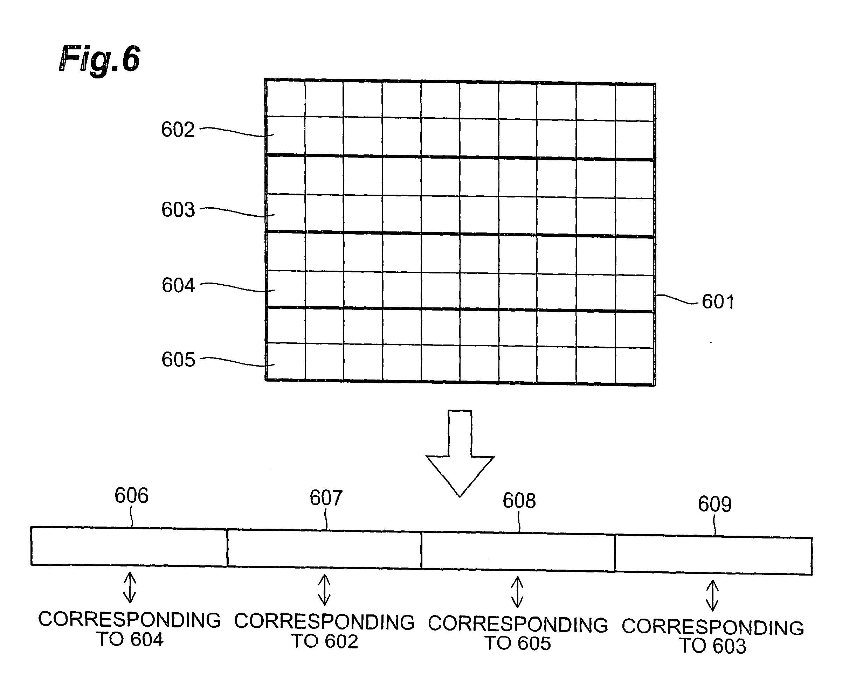

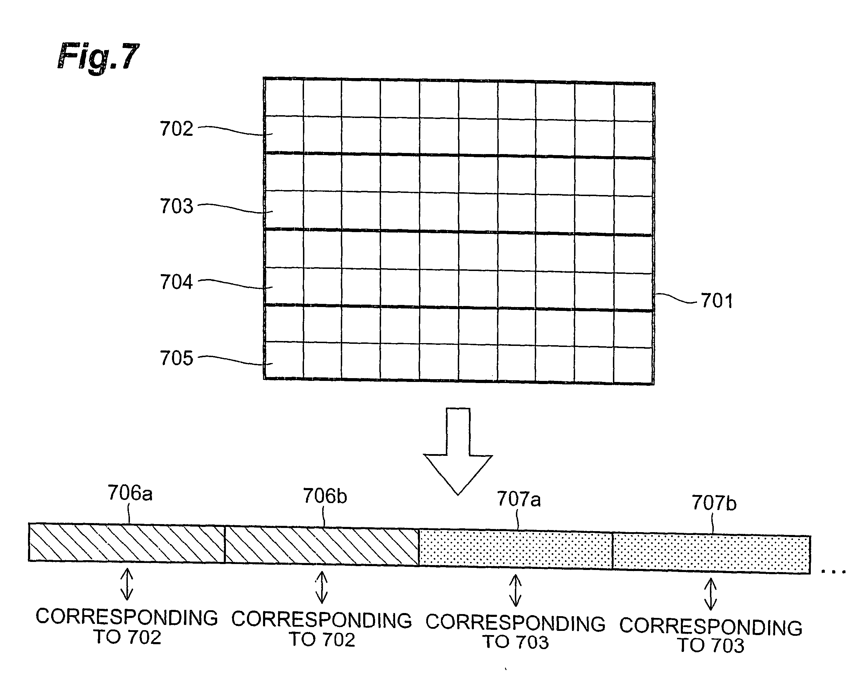

In order to decentralize errors, as shown in Fig. 5, there is an encoding and transmission method of collecting alternate macroblocks into one slice (in Fig. 5, macroblocks in a frame image 501 are alternately collected into a slice 502 and into a slice 503). In this case the encoding efficiency decreases because the correlation between macroblocks is not available. However, it is effective in decentralization of errors. Similarly, an error-resilient scheme can be made up by sending data of slices in an arbitrary order different from an order of scan lines. Fig. 6 shows a method of transmitting data of slice 604 first and transmitting data of slice 602 next (wherein packets 606, 607, 608, and 609 contain data corresponding to slices 604, 602, 605, and 603, respectively), whereas in the normal process the encoded data is transmitted in the order of slices 602, 603, 604, and 605 forming the frame image 601. There is also a technique of repeatedly transmitting data of the same slice. For example, Fig. 7 shows a transmission method of duplicating encoded data of a slice 702 to store the same data in a packet 706a and in a packet 706b, and transmitting the packets. Even if an error is made in the data of packet 706a or even if the packet 706a itself is lost, the image of the same slice can be reproduced as long as the data of the packet 706b is present. The function of enhancing the error resilience of the encoded image in association with the encoding, for example, by encoding each of regions in a frame image in an order different from the scan order of the image or by duplicating the compressed data encoded by the encoding means, as described above, will be referred to as an "error resilience tool."

As described above, the conventional H.264 encoding system achieves improvement in the error resilience capability by use of the slice structure, and improvement in the image quality and compression rate by use of the intra-loop filter.

### SUMMARY OF THE INVENTION

However, the use of the above slice structure indeed improves the error resilience capability, but decreases the encoding efficiency because the prediction becomes discontinuous at a boundary between slices. In addition, the repetitive transmission of the same data as shown in Fig. 7 enhances the error resilience in fact, but poses a problem of increase in data volume.

In use of a video communication terminal, it is desirable to perform encoding as follows: in a type of usage where errors are likely to be mixed in compressed encoded data like the video phones through radio links, the data is encoded by selecting such an encoding means as to enhance the error resilience capability more, even with some sacrifices in the image quality and encoding efficiency; in a type of usage where errors are unlikely to be mixed like the video cameras, the data is encoded by selecting such an encoding means as to improve the image quality and encoding efficiency, even with some sacrifices in the error resilience capability.

However, there was no conventional means for properly setting a combination of encoding means according to environments or purposes of use of the video communication terminal, and therefore the enhancement of the error resilience capability more than necessary posed a problem of degradation of the image quality and encoding efficiency.

Concerning the intra-loop filter, when it is applied to a first slice incorrectly decoded because of mixture of error and to a second slice without error adjacent thereto, the process of the intra-loop filter between the slices results in making distortion in the result of filtering of the second slice image to be normally decoded. Accordingly, the use of the intra-loop filter degrades the error resilience capability and therefore the simultaneous use of the loop filter and the slice structure will degrade the benefit of the improvement in the error resilience capability by use of the slice structure. In the case where there exist a plurality of encoding means and where they are used in combination, as described above, the error resilience capability and, the image quality, the encoding efficiency, etc. will be needlessly degraded unless an appropriate combination is made.

Conventionally, however, whether an encoding means should be used or not was independently determined in each encoding means, and thus there were problems of needless decrease in the error resilience capability and needless degradation of the image quality and encoding efficiency.

The present invention has been accomplished in order to solve the above problems and an object of the present invention is therefore to provide moving-picture encoding apparatus, moving-picture encoding methods, and moving-picture encoding programs capable of enhancing the error resilience capability under an environment requiring the error resilience and capable of enhancing the image quality and encoding efficiency under an environment not requiring the error resilience.

In order to achieve the above object, a moving-picture encoding apparatus according to the present invention is a moving-picture encoding apparatus comprising: input means for input of an image; image encoding means for dividing the image inputted by the image input means, into a plurality of regions and performing encoding thereof, the image encoding means having a function of selectively turning on or off an error resilience tool for enhancing error resilience of the encoded image in association with the encoding; storing means for storing compressed data encoded by the image encoding means; sending means for sending the compressed data encoded by the image encoding means, to the outside; and determining means for determining either of a first mode of outputting the compressed data encoded by the image encoding means, to the sending means and a second mode of outputting the compressed data encoded by the image encoding means, to the storing means, based on a user's instruction input, and for determining such an encoding condition as to turn off the error resilience tool when the second mode is determined; wherein the image encoding means performs the encoding of the image in accordance with the encoding condition determined by the determining means, and stores the compressed data encoded, into the storing means when the second mode is determined.

In the moving-picture encoding apparatus according to the present invention, the determining means can determine either of a first mode of outputting the compressed data encoded by the image encoding means, to the sending means and a second mode of outputting the compressed data encoded by the image encoding means, to the storing means, based on a user's instruction input, and determine such an encoding condition as to turn on the error resilience tool when the first mode is determined, or as to turn off the error resilience tool when the second mode is determined; and the image encoding means can perform the encoding of the image in accordance with the encoding condition determined by the determining means, outputs the compressed data encoded, to the sending means when the first mode is determined, and stores the compressed data encoded, into the storing means when the second mode is determined.

In order to achieve the above object, a moving-picture encoding method according to the present invention is a moving-picture encoding method comprising: an input step of inputting an image by use of image input means; an image encoding step of dividing the image inputted in the image input step, into a plurality of regions, and encoding the image while selectively turning on or off an error resilience tool of enhancing error resilience of the encoded image in association with the encoding; a storing step of storing the compressed data encoded in the image encoding step, into storing means; a sending step of sending the compressed data encoded in the image encoding step, from sending means to the outside; and a determining step of determining either of a first mode of outputting the compressed data encoded in the image encoding step, to the sending means and a second mode of outputting the compressed data encoded in the image encoding step, to the storing means, based on a user's instruction input, and determining such an encoding condition as to turn off the error resilience tool when the second mode is determined; wherein the image encoding step is to perform the encoding of the image in accordance with the encoding condition determined in the determining step, to store the compressed data encoded, into the storing means when the second mode is determined.

In the moving-picture encoding method according to the present invention, the determining step can determines either of a first mode of outputting the compressed data encoded in the image encoding step, to the sending means and a second mode of outputting the compressed data encoded in the image encoding step, to the storing means, based on a user's instruction input, and determines such an encoding condition as to turn on the error resilience tool when the first mode is determined, or as to turn off the error resilience tool when the second mode is determined; and the image encoding step can be to perform the encoding of the image in accordance with the encoding condition determined in the determining step, to output the compressed data encoded, to the sending means when the first mode is determined, and to store the compressed data encoded, into the storing means when the second mode is determined.

In order to achieve the above object, a moving-picture encoding program according to the present invention is a moving-picture encoding program for letting a computer function as: input means for input of an image; image encoding means for dividing the image inputted by the image input means, into a plurality of regions and performing encoding thereof, the image encoding means having a function of selectively turning on or off an error resilience tool for enhancing error resilience of the encoded image in association with the encoding; storing means for storing compressed data encoded by the image encoding means; sending means for sending the compressed data encoded by the image encoding means, to the outside; and determining means for determining either of a first mode of outputting the compressed data encoded by the image encoding means, to the sending means and a second mode of outputting the compressed data encoded by the image encoding means, to the storing means, based on a user's instruction input, and for determining such an encoding condition as to turn off the error resilience tool when the second mode is determined; wherein the image encoding means performs the encoding of the image in accordance with the encoding condition determined by the determining means, and stores the compressed data encoded, into the storing means when the second mode is determined.

In the moving-picture encoding program according to the present invention, the determining means can determine either of a first mode of outputting the compressed data encoded by the image encoding means, to the sending means and a second mode of outputting the compressed data encoded by the image encoding means, to the storing means, based on a user's instruction input, and determine such an encoding condition as to turn on the error resilience tool when the first mode is determined, or as to turn off the error resilience tool when the second mode is determined; and the image encoding means can perform the encoding of the image in accordance with the encoding condition determined by the determining means, outputs the compressed data encoded, to the sending means when the first mode is determined, and stores the compressed data encoded, into the storing means when the second mode is determined.

By adopting the configuration as described above, it becomes feasible to achieve improvement in the error resilience capability under an environment requiring the error resilience (during transmission to the outside) and to achieve improvement in the image quality and encoding efficiency under an environment not requiring the error resilience (during storage inside).

In the moving-picture encoding apparatus according to the present invention, the determining means can determine either of a first mode of outputting the compressed data encoded by the image encoding means, to the sending means and a second mode of outputting the compressed data to the storing means, based on a user's instruction input, and determine such an encoding condition as to turn on the error resilience tool and turn off a filtering process across a boundary between the regions when the first mode is determined, or as to turn on the filtering process across the boundary between the regions and turn off the error resilience tool when the second mode is determined; and the image encoding means can perform the encoding of the image in accordance with the encoding condition determined by the determining means, outputs the compressed data encoded, to the sending means when the first mode is determined, and stores the compressed data encoded, into the storing means when the second mode is determined.

In the moving-picture encoding method according to the present invention, the determining step can determine either of a first mode of outputting the compressed data encoded in the image encoding step, to the sending means and a second mode of outputting the compressed data to the storing means, based on a user's instruction input, and determine such an encoding condition as to turn on the error resilience tool and turn off a filtering process across a boundary between the regions when the first mode is determined, or as to turn on the filtering process across the boundary between the regions and turn off the error resilience tool when the second mode is determined; and the encoding step can be to perform the encoding of the image in accordance with the encoding condition determined in the determining step, to output the compressed data encoded, to the sending means when the first mode is determined, and to store the compressed data encoded, into the storing means when the second mode is determined.

In the moving-picture encoding program according to the present invention, the determining means can determine either of a first mode of outputting the compressed data encoded by the image encoding means, to the sending means and a second mode of outputting the compressed data to the storing means, based on a user's instruction input, and determine such an encoding condition as to turn on the error resilience tool and turn off a filtering process across a boundary between the regions when the first mode is determined, or as to turn on the filtering process across the boundary between the regions and turn off the error resilience tool when the second mode is determined; and the image encoding means can perform the encoding of the image in accordance with the encoding condition determined by the determining means, outputs the compressed data encoded, to the sending means when the first mode is determined, and stores the compressed data encoded, into the storing means when the second mode is determined.

By adopting the configuration as described above, it becomes feasible to achieve improvement in the error resilience capability under an environment requiring the error resilience (during transmission to the outside) and to achieve improvement in the image quality and encoding efficiency under an environment not requiring the error resilience (during storage inside). Particularly, the filtering process across the boundary between the regions is turned off under an environment likely to cause error (during transmission to the outside), whereby data of a packet without error can be correctly reproduced.

In order to achieve the above object, another moving-picture encoding apparatus according to the present invention is a moving-picture encoding apparatus comprising: input means for input of an image; image encoding means for dividing the image inputted by the image input means, into a plurality of regions and performing encoding thereof, the image encoding means having a function of selectively turning on or off an error resilience tool for enhancing error resilience of the encoded image in association with the encoding; sending means for sending compressed data encoded by the image encoding means, to the outside and for acquiring a transmission error rate of an external link; and link determining means for, based on the transmission error rate of the external link acquired by the sending means, determining a first mode when the transmission error rate exceeds a predetermined threshold, or determining a second mode when the transmission error rate is not more than the predetermined threshold, and for determining such an encoding condition as to turn on the error resilience tool when the first mode is determined, or as to turn off the error resilience tool when the second mode is determined; wherein the image encoding means performs the encoding of the image in accordance with the encoding condition determined by the link determining means, and outputs the compressed data encoded, to the sending means.

In the moving-picture encoding apparatus according to the present invention, the determining means, based on the transmission error rate of the external link acquired by the sending means, can determine a first mode when the transmission error rate exceeds a predetermined threshold, or determine a second mode when the transmission error rate is not more than the predetermined threshold, and determine such an encoding condition as to turn on the error resilience tool and turn off a filtering process across a boundary between the regions when the first mode is determined, or as to turn on the filtering process across the boundary between the regions and turn off the error resilience tool when the second mode is determined.

In order to achieve the above object, another moving-picture encoding method according to the present invention is a moving-picture encoding method comprising: an input step of inputting an image by use of image input means; an image encoding step of dividing the image inputted in the image input step, into a plurality of regions, and encoding the image while selectively turning on or off an error resilience tool of enhancing error resilience of the encoded image in association with the encoding; a sending step of sending compressed data encoded in the image encoding step, from sending means to the outside, and acquiring a transmission error rate of an external link by the sending means; and a link determining step of, based on the transmission error rate of the external link acquired in the sending step, determining a first mode when the transmission error rate exceeds a predetermined threshold, or determining a second mode when the transmission error rate is not more than the predetermined threshold, and determining such an encoding condition as to turn on the error resilience tool when the first mode is determined, or as to turn off the error resilience tool when the second mode is determined; wherein the image encoding step is to perform the encoding of the image in accordance with the encoding condition determined in the link determining step and to output the compressed data encoded, to the sending means.

In the moving-picture encoding method according to the present invention, the link determining step, based on the transmission error rate of the external link acquired in the sending step, can determine a first mode when the transmission error rate exceeds a predetermined threshold, or determine a second mode when the transmission error rate is not more than the predetermined threshold, and determine such an encoding condition as to turn on the error resilience tool and turn off a filtering process across a boundary between the regions when the first mode is determined, or as to turn on the filtering process across the boundary between the regions and turn off the error resilience tool when the second mode is determined.

In order to achieve the above object, another moving-picture encoding program according to the present invention is a moving-picture encoding program for letting a computer function as: input means for input of an image; image encoding means for dividing the image inputted by the image input means, into a plurality of regions and performing encoding thereof, the image encoding means having a function of selectively turning on or off an error resilience tool for enhancing error resilience of the encoded image in association with the encoding; sending means for sending compressed data encoded by the image encoding means, to the outside and for acquiring a transmission error rate of an external link; and link determining means for, based on the transmission error rate of the external link acquired by the sending means, determining a first mode when the transmission error rate exceeds a predetermined threshold, or determining a second mode when the transmission error rate is not more than the predetermined threshold, and for determining such an encoding condition as to turn on the error resilience tool when the first mode is determined, or as to turn off the error resilience tool when the second mode is determined; wherein the image encoding means performs the encoding of the image in accordance with the encoding condition determined by the link determining means, and outputs the compressed data encoded, to the sending means.

In the moving-picture encoding program according to the present invention, the link determining means, based on the transmission error rate of the external link acquired by the sending means, can determine a first mode when the transmission error rate exceeds a predetermined threshold, or determine a second mode when the transmission error rate is not more than the predetermined threshold, and determine such an encoding condition as to turn on the error resilience tool and turn off a filtering process across a boundary between the regions when the first mode is determined, or as to turn on the filtering process across the boundary between the regions and turn off the error resilience tool when the second mode is determined.

By adopting the configuration as described above, it becomes feasible to achieve improvement in the error resilience capability under an environment requiring the error resilience (at a high transmission error rate) and to achieve improvement in the image quality and encoding efficiency under an environment not requiring the error resilience (at a low transmission error rate).

In the moving-picture encoding apparatus of the present invention, the above-described error resilience tool can be a tool of encoding each of the regions in an order different from a scan order of the image, or a tool of duplicating the compressed data encoded by the encoding means.

Since the present invention realizes the encoding based on the appropriate determination on use or nonuse of the encoding means for error resilience according to types or purposes of usage of the video communication terminal, it presents the effect of enhancing the error resilience capability under an environment requiring the error resilience and improving the image quality and encoding efficiency under an environment not requiring the error resilience capability.

Since the present invention realizes the encoding with the control of the encoding means so as to be used in the optimal combination in the video encoding, it provides the effect of capability of avoiding the degradation of the error resilience capability due to the loop filter and avoiding the degradation of the image quality and the encoding efficiency due to the unnecessary error resilience capability.

### BRIEF DESCRIPTION OF THE DRAWINGS

Fig. 1 is a schematic diagram showing a macroblock structure in encoding of an image used in the conventional technology.
Fig. 2 is a schematic diagram showing a slice structure in encoding of an image used in the conventional technology.
Fig. 3 is a block diagram showing a moving-picture encoding apparatus according to the first embodiment of the present invention.
Fig. 4 is a flowchart showing a first determination method in the moving-picture encoding apparatus according to the first embodiment of the present invention.
Fig. 5 is a schematic diagram showing a first error-resilient encoding method used in the first embodiment of the present invention.
Fig. 6 is a schematic diagram showing a second error-resilient encoding method used in the first embodiment of the present invention.
Fig. 7 is a schematic diagram showing a third error-resilient encoding method used in the first embodiment of the present invention.
Fig. 8 is a flowchart showing a second determination method in the moving-picture encoding apparatus according to the first embodiment of the present invention.
Fig. 9 is a schematic diagram showing an intra-loop filter in the moving-picture encoding apparatus according to the first embodiment of the present invention.
Fig. 10 is a block diagram showing a moving-picture encoding apparatus according to the second embodiment of the present invention.
Figs. 11A to 11C are illustrations for explaining a data storage medium for storing a program for implementing moving-picture encoding and decoding methods in each of the embodiments by a computer system.
Fig. 12 is a flowchart showing a determination method in the moving-picture encoding apparatus according to the second embodiment of the present invention.

### DETAILED DESCRIPTION OF THE PREFERRED EMBODIMENTS

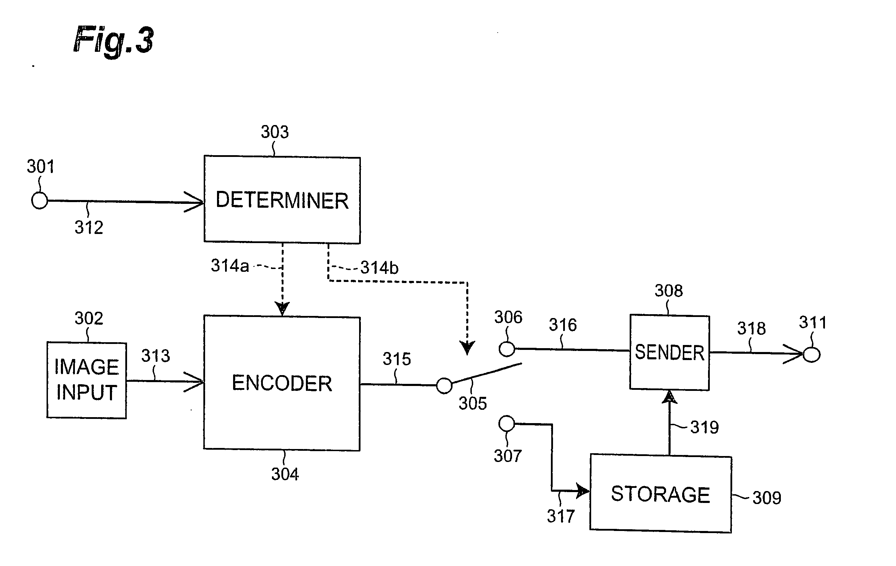

Embodiments of the present invention will be described below with reference to Figs. 3 to 12.

### (Embodiment 1)

Fig. 3 is a block diagram of a moving-picture encoding apparatus according to the first embodiment of the present invention. In Fig. 3, reference numeral 301 designates an input terminal, 302 an image input device, 303 a determining device, 304 an encoding device, 305 a changeover switch, 308 a sending device, 309 a storage device, and 311 an output terminal.

Concerning the moving-picture encoding apparatus of the structure as described above, the operation thereof will be described below. The image input device 302 takes in a moving picture. In the present embodiment the image input device is a video camera, but it can also be a means capable of being connected to a videocassette recorder or a television and taking in video signals. As the moving picture is taken in, an image signal thereof is compressively encoded by the encoder 304. The present embodiment uses H.264, but it is also possible to use any other encoder such as H.263 or MPEG-4 or the like. The compressed data encoded in this way is sent via the changeover switch 305 to the sending device 308 or to the storage device 309. The present embodiment employs a radio transmission method based on IMT-2000, but it is also possible to use any other wireless or wire transmission method. The storage device 309 is an internal memory of terminal equipment or an external memory card, but it may be any recording medium capable of recording data.

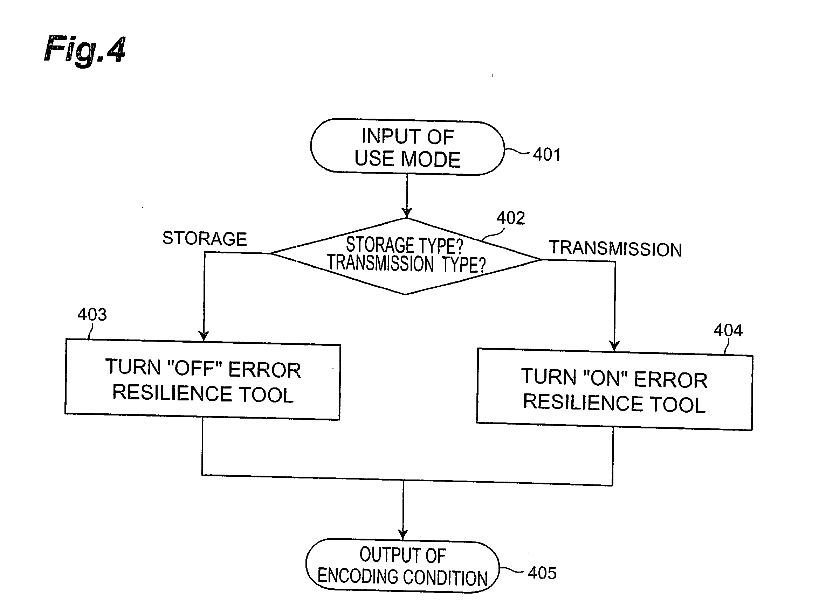

The switch 305 switches depending upon whether the compressed data encoded by the encoder 304 is to be sent to the sending device 308 or to the storage device 309. A device to control the switching operation of the switch 305 is the determining device 303. The determining device 303 performs the processing shown in Fig. 4 according to an input from the input terminal 301. In the present embodiment an input signal into the input terminal 301 is determined by selection from menus indicated on a display device (not shown) in the apparatus. The menus include choices of video phone, video recording, and video mail, one of which is selected. A menu selected in this manner is sent as a signal of a use mode to the determining device 303.

Fig. 4 shows a flowchart of a first determining method in the present embodiment. At step 401, the user first enters a use mode. At step 402, either a storage type or a transmission type is then determined based on the input use mode. Let us define herein as a storage type a case where entire data of an image encoded by the encoder 304 (from a start to an end of the image) is stored into the storage device 309, as in the case of video recording or video mail. On the other hand, a case where an image encoded by the encoder 304 is sequentially transmitted via the sending device 308 to the outside (e.g., a wireless network) is defined as a transmission type. In general, in the case of the transmission type, the encoded data is also temporarily stored in part in a buffer for the purposes of multiplexing and modulation, but it is different from the storage type of storing the whole of the image data. Where step 402 results in determining the storage type, the flow goes to step 403 and at step 405 the determining device 303 outputs an encoding condition to turn "off" the error resilience tool. In the case of the transmission type on the other hand, the flow goes to step 404 and at step 405 the determining device 303 outputs an encoding condition to turn "on" the error resilience tool. In the present embodiment, when the error resilience tool is "on," the encoder 304 performs the encoding process by either of the methods described below or by a combination thereof.

Fig. 5 is a schematic diagram of a first error resilience tool used in the present embodiment. An image 501 is divided into a plurality of macroblocks each consisting of 16 x 16 pixels, and macroblocks with even numbers of 0, 2, 4, 6,... are rearranged into one slice 502 to be encoded. On the other hand, macroblocks with odd numbers of 1, 3, 5,... are also rearranged into another slice 503 to be encoded. Another rearranging method is as follows: for macroblocks on horizontal lines, macroblocks on the odd lines of the first row, the third row, and the fifth row are grouped into one slice group, and macroblocks on the even lines of the zeroth row, the second row, and the fourth row are grouped into another slice group, thus rearranging the macroblocks into two slice groups to be encoded. The macroblocks may be rearranged according to any other rule than the above methods.

Fig. 6 is a schematic diagram of a second error resilience tool used in the present embodiment. An image 601 is divided into regions (slices) of 602 to 605, and each slice is encoded. The data encoded in this manner is transmitted in a so-called arbitrary slice order of first transmitting data of packet 606 corresponding to slice 604 and then transmitting data of packet 607 corresponding to slice 602, instead of the conventional method of transmitting the data in order from top.

Fig. 7 is a schematic diagram of a third error resilience tool used in the present embodiment. An image 701 is divided into regions (slices) of 702 to 705, and each slice is encoded. In transmission of the data, the data corresponding to the slice 702 is put into a packet 706a and into a packet 706b, so that the same data is transmitted in the two packets. Namely, the data in 706a is the same as the encoded data of the image in 706b (though they are different in header information for distinguishing a packet). Similarly, the data of the slice 703 is duplicated and transmitted in packets 707a and 707b.

It is also possible to use any other technique for enhancement of the error resilience than the above techniques. For example, it is possible to use a data partition for separately encoding data of motion and data of transform coefficients of an image, or a method of adaptively carrying out refresh operation.

When in the present embodiment the error resilience tool is "off" on the other hand, the data is encoded in the following manner, without carrying out the processes from Fig. 5 to Fig. 7. Namely, the data is encoded in the scan order without rearrangement of macroblocks, and the encoded slice data is arranged in order from top to bottom. The data is not duplicated.

The determining device 303 makes a determination in the aforementioned method, sends an encoding condition according to the result of the determination via a line 314a to the encoder 304, and also sends a control signal via a line 314b to the switch 305 to control it. In the case of the storage type, the switch 305 is flipped to a terminal 307 and in the case of the transmission type, the switch 305 is flipped to a terminal 306. The encoder 304 performs the encoding while turning the error resilience tool "off" in the case of the storage type, and performs the encoding while turning the error resilience tool "on" in the case of the transmission type. In this manner, the apparatus enhances the error resilience to transmit data under an environment likely to cause error, e.g., like a wireless network, and performs the encoding with focus on the image quality while weakening the error resilience, in the case of video recording or video mail.

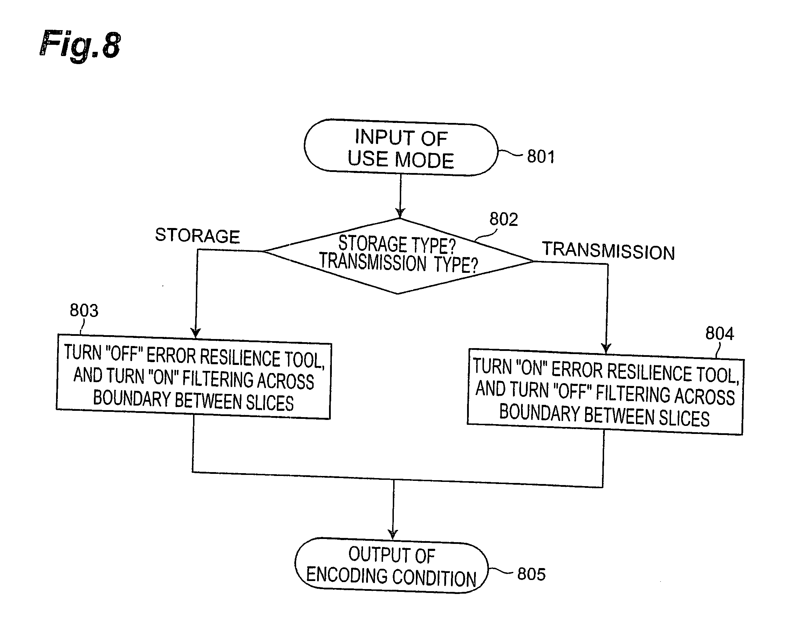

Fig. 8 is a flowchart of a second determining method in the present embodiment. At step 801, a use mode is first inputted. At step 802, either the storage type or the transmission type is then determined based on the input use mode. When step 802 results in determining the storage type, the flow goes to step 803 and at step 805 the determining device 303 outputs an encoding condition to turn "off" the error resilience tool and turn "on" filtering across a boundary between slices. On the other hand, in the case of the transmission type, the flow goes to step 804 and at step 805 the determining device 303 outputs an encoding condition to turn "on" the error resilience tool and turn "off" the filtering across a boundary between slices. In the present embodiment, when the filtering across a boundary between slices is "on," the encoder 304 performs the encoding process according to a method described below.

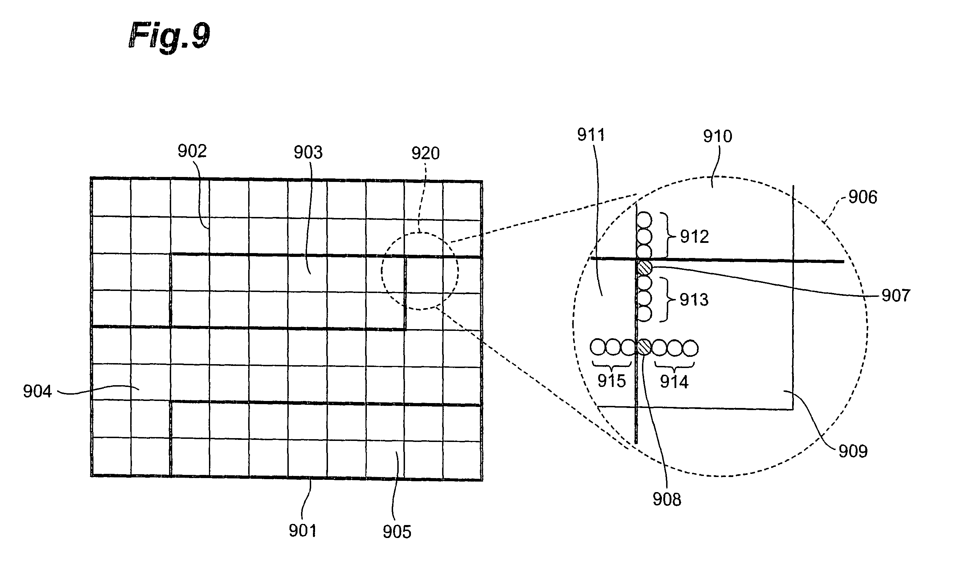

Fig. 9 is a schematic diagram of an intra-loop filter in the present embodiment. The intra-loop filter refers to a process of filtering an image at the present time reproduced before storage into a frame memory, as a reference image for encoding of subsequent images. The intra-loop filter reduces the block distortion at a boundary of a block. In order to improve the image quality, it is desirable to effect filtering across a boundary between slices. An image 901 in Fig. 9 is divided into four slices 902 to 905. An enlargement of a circular region 920 is given as an enlarged circular region 906. For vertical filtering of a pixel 907 in a macroblock 909, pixels 912 in an adjacent slice are also used in addition to pixels 913 in the macroblock 909. Similarly, for horizontal filtering of a pixel 908, pixels 915 in an adjacent slice are also used in addition to pixels 914. Such process is called filtering across a boundary between slices. On the other hand, filtering without crossing a boundary between slices is filtering with use of only pixels within a slice. The example herein uses the filter of seven taps including the pixel as a target to be processed, but the filter does not have to be limited to it. The example herein uses the one-dimensional separation filter, but it is also possible to use a two-dimensional filter.

The image data encoded in this manner has the following features. Namely, when a syntax to indicate the error resilience tool is "on" (in the present embodiment, when num_slice_groups_minus1 being a syntax in ITU-T Recommendation H.264 takes a value other than 0), a syntax to indicate the filtering across a boundary between slices becomes "off" (in the present embodiment, disable_deblocking_filter_idc being a syntax in ITU-T Recommendation H.264 takes a value other than 0). When the syntax to indicate the filtering across a boundary between slices is "on" (in the present embodiment, when disable_deblocking_filter_idc being the syntax in ITU-T Recommendation H.264 takes the value of 0), the syntax to indicate the error resilience tool becomes "off" (in the present embodiment, num_slice_groups_minus1 being the syntax in ITU-T Recommendation H.264 takes the value of 0). In the present embodiment, when the syntax to indicate the error resilience tool is "off," the syntax to indicate the filtering across a boundary between slices may be "off" or "on." Similarly, when the syntax to indicate the filtering across a boundary between slices is "off," the syntax to indicate the error resilience tool may be "off" or "on."

The error resilience tool is turned "on" in an environment where many errors can occur, so as to result in loss of packet and occurrence of error. For this reason, the filtering across a boundary between slices can lead to failure in correct reproduction of data of a packet without error. Therefore, turning the filtering off provides the effect of enabling correct reproduction of data of a packet without error.

### (Embodiment 2)

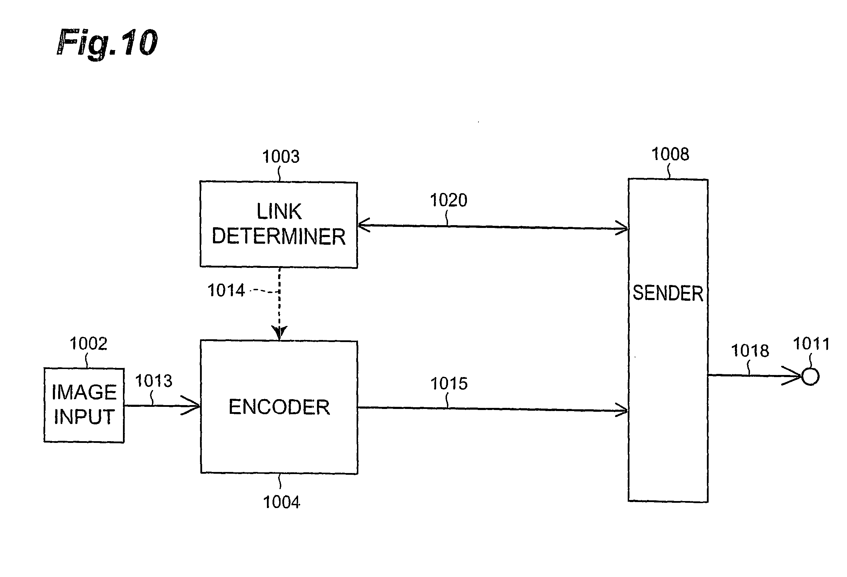

Fig. 10 is a block diagram of a moving-picture encoding apparatus according to the second embodiment of the present invention. In Fig. 10, reference numeral 1002 designates an image input device, 1003 a link determining device, 1004 an encoding device, 1008 a sending device, and 1011 an output terminal.

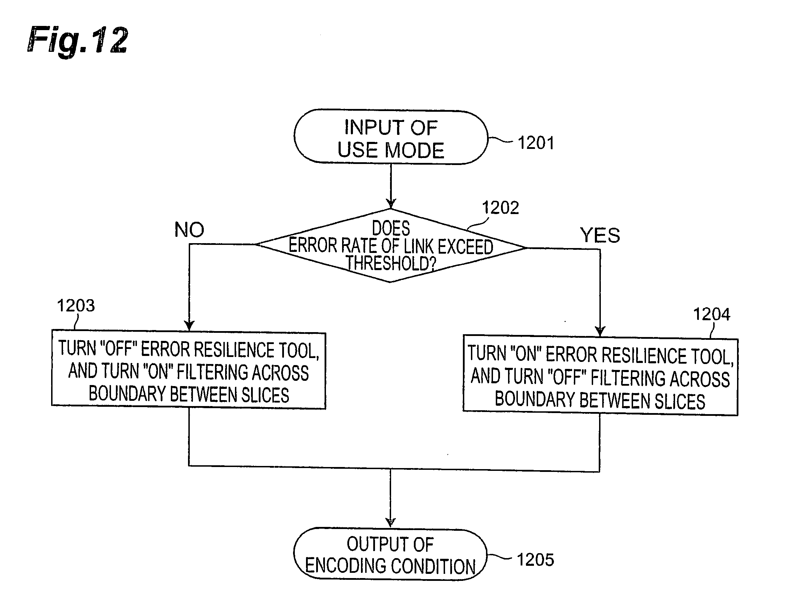

Concerning the moving-picture encoding apparatus of the structure as described above, the operation thereof will be described below. The image input device 302 takes in a moving picture. As the moving picture is taken in, an image signal thereof is compressively encoded by the encoder 1004. The compressed data encoded in this manner is sent to the sending device 1008 and is transmitted via the output terminal 1011 to an external transmission network. The link determining device 1003 captures a transmission situation of the external network through communication with the sending device 1008. Specifically, on the occasion of establishing a link, it receives a reply about a reception condition from a receiver to check a link situation. The link determiner 1003 determines an encoding condition according to the link situation and the encoder 1004 encodes the image in accordance with the encoding condition. The processing in the line determining device 1003 in the present embodiment is shown in Fig. 12. The fundamental processing is the same as in Fig. 8. In the processing herein step 1202 is to compare an error rate of a link with a threshold, as a determination condition. When the error rate exceeds the threshold, it is determined that a lot of errors can occur, and step 1204 is carried out to turn on the error resilience tool and turn off the filtering across a boundary between slices. Otherwise, the flow goes to step 1203 to turn off the error resilience tool and turn on the filtering across a boundary between slices. The threshold herein is 0.0001, but it can be any other value. Instead of measuring the error rate of the link, the encoding condition may also be determined based on whether the network is a best effort type or a rate assurance type.

In this embodiment, the process shown in Fig.4 can be carried out instead of the process shown in Fig.12. That is, when the error rate exceeds the threshold, step 404 is carried out to turn on the error resilience tool. Otherwise, the flow goes to step 403 to turn off the error resilience tool.

Since the apparatus is configured to determine the encoding condition according to the situation of the transmission network and perform the encoding while controlling the encoding means so as to be used in the optimal combination, as described above, it can achieve the effect of capability of avoiding the degradation of the error resilience capability due to the loop filter and avoiding the degradation of the image quality and encoding efficiency due to the unnecessary error resilience capability.

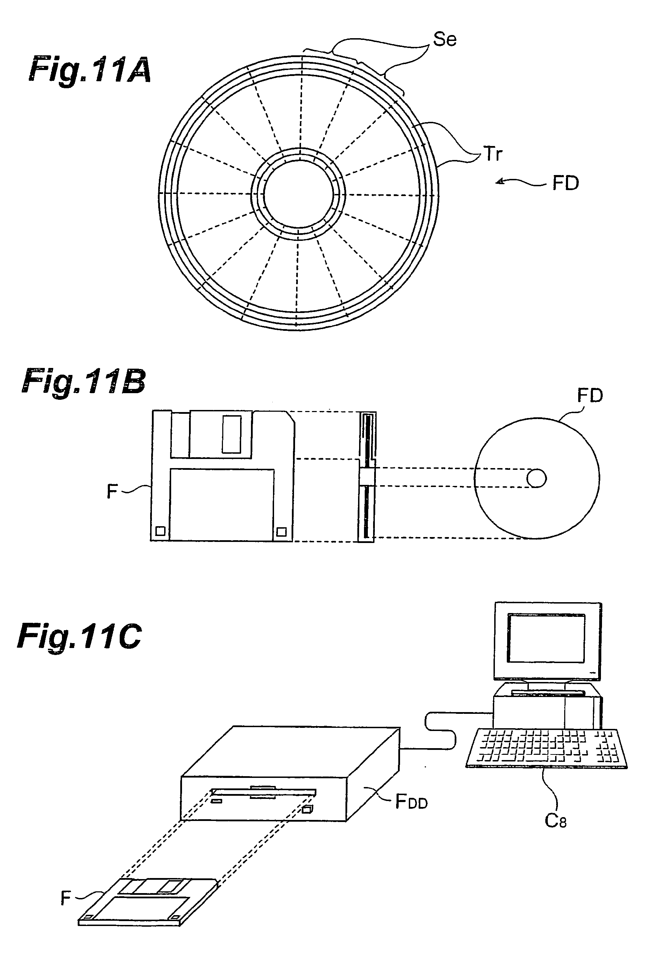

Figs. 11A to 11C is an illustration for explaining a case where the encoding process in the above embodiment 1 or 2 is carried out by a computer system, using a floppy (registered trademark) disk storing the foregoing encoding program.

Fig. 11B shows the appearance from the front of a floppy (registered trademark) disk, a sectional structure thereof, and the floppy (registered trademark) disk, and Fig. 11A shows an example of a physical format of the floppy (registered trademark) disk being the main body of a recording medium. The floppy (registered trademark) disk FD is set in a case F, a plurality of tracks Tr are concentrically formed from the outside periphery toward the inside periphery on the surface of the disk, and each track is sectioned into sixteen sectors Se in the angular direction. Therefore, in the floppy (registered trademark) disk storing the aforementioned program, data as the aforementioned program is recorded in regions allocated on the floppy (registered trademark) disk FD.

Fig. 11C shows a configuration for recording and reproduction of the program on the floppy (registered trademark) disk FD. For recording the program onto the floppy (registered trademark) disk FD, the data as the program from a computer system Cs is written through a floppy (registered trademark) disk drive onto the disk. When the aforementioned encoding or decoding apparatus is constructed in the computer system by the program in the floppy (registered trademark) disk, the program is read out of the floppy (registered trademark) disk by the floppy (registered trademark) disk drive, and is transferred to the computer system.

In the above description, the floppy (registered trademark) disk was used as a data recording medium, but an optical disk can also be used similarly. The recording media are not limited to these, but can be any media capable of recording the program, such as IC cards, ROM cassettes, etc., with similar effect.

## Claims

1. A moving-picture encoding apparatus comprising:
input means for input of an image;
image encoding means for dividing the image inputted by the image input means, into a plurality of regions and performing encoding thereof, the image encoding means having a function of selectively turning on or off an error resilience tool for enhancing error resilience of the encoded image in association with the encoding;
storing means for storing compressed data encoded by the image encoding means;
sending means for sending the compressed data encoded by the image encoding means, to the outside; and
determining means for determining either of a first mode of outputting the compressed data encoded by the image encoding means, to the sending means and a second mode of outputting the compressed data encoded by the image encoding means, to the storing means, based on a user's instruction input, and for determining such an encoding condition as to turn off the error resilience tool when the second mode is determined;
wherein the image encoding means performs the encoding of the image in accordance with the encoding condition determined by the determining means, and stores the compressed data encoded, into the storing means when the second mode is determined.

2. The moving-picture encoding apparatus according to Claim 1, wherein
the determining means determines either of a first mode of outputting the compressed data encoded by the image encoding means, to the sending means and a second mode of outputting the compressed data encoded by the image encoding means, to the storing means, based on a user's instruction input, and determines such an encoding condition as to turn on the error resilience tool when the first mode is determined, or as to turn off the error resilience tool when the second mode is determined;
and the image encoding means performs the encoding of the image in accordance with the encoding condition determined by the determining means, outputs the compressed data encoded, to the sending means when the first mode is determined, and stores the compressed data encoded, into the storing means when the second mode is determined.

3. The moving-picture encoding apparatus according to Claim 1, wherein
the determining means determines either of a first mode of outputting the compressed data encoded by the image encoding means, to the sending means and a second mode of outputting the compressed data to the storing means, based on a user's instruction input, and determines such an encoding condition as to turn on the error resilience tool and turn off a filtering process across a boundary between the regions when the first mode is determined, or as to turn on the filtering process across the boundary between the regions and turn off the error resilience tool when the second mode is determined;
and the image encoding means performs the encoding of the image in accordance with the encoding condition determined by the determining means, outputs the compressed data encoded, to the sending means when the first mode is determined, and stores the compressed data encoded, into the storing means when the second mode is determined.

4. A moving-picture encoding apparatus comprising:
input means for input of an image;
image encoding means for dividing the image inputted by the image input means, into a plurality of regions and performing encoding thereof, the image encoding means having a function of selectively turning on or off an error resilience tool for enhancing error resilience of the encoded image in association with the encoding;
sending means for sending compressed data encoded by the image encoding means, to the outside and for acquiring a transmission error rate of an external link; and
link determining means for, based on the transmission error rate of the external link acquired by the sending means, determining a first mode when the transmission error rate exceeds a predetermined threshold, or determining a second mode when the transmission error rate is not more than the predetermined threshold, and for determining such an encoding condition as to turn on the error resilience tool when the first mode is determined, or as to turn off the error resilience tool when the second mode is determined;
wherein the image encoding means performs the encoding of the image in accordance with the encoding condition determined by the link determining means, and outputs the compressed data encoded, to the sending means.

5. The moving-picture encoding apparatus according to Claim 4, wherein
the determining means, based on the transmission error rate of the external link acquired by the sending means, determines a first mode when the transmission error rate exceeds a predetermined threshold, or determines a second mode when the transmission error rate is not more than the predetermined threshold, and determines such an encoding condition as to turn on the error resilience tool and turn off a filtering process across a boundary between the regions when the first mode is determined, or as to turn on the filtering process across the boundary between the regions and turn off the error resilience tool when the second mode is determined.

6. The moving-picture encoding apparatus according to any one of Claims 1 to 5, wherein the error resilience tool is a tool of encoding each of the regions in an order different from a scan order of the image.

7. The moving-picture encoding apparatus according to any one of Claims 1 to 5, wherein the error resilience tool is a tool of duplicating the compressed data encoded by the encoding means.

8. A moving-picture encoding method comprising:
an input step of inputting an image by use of image input means;
an image encoding step of dividing the image inputted in the image input step, into a plurality of regions, and encoding the image while selectively turning on or off an error resilience tool of enhancing error resilience of the encoded image in association with the encoding;
a storing step of storing the compressed data encoded in the image encoding step, into storing means;
a sending step of sending the compressed data encoded in the image encoding step, from sending means to the outside; and
a determining step of determining either of a first mode of outputting the compressed data encoded in the image encoding step, to the sending means and a second mode of outputting the compressed data encoded in the image encoding step, to the storing means, based on a user's instruction input, and determining such an encoding condition as to turn off the error resilience tool when the second mode is determined;
wherein the image encoding step is to perform the encoding of the image in accordance with the encoding condition determined in the determining step, to store the compressed data encoded, into the storing means when the second mode is determined.

9. The moving-picture encoding method according to Claim 8, wherein
the determining step determines either of a first mode of outputting the compressed data encoded in the image encoding step, to the sending means and a second mode of outputting the compressed data encoded in the image encoding step, to the storing means, based on a user's instruction input, and determines such an encoding condition as to turn on the error resilience tool when the first mode is determined, or as to turn off the error resilience tool when the second mode is determined;
and the image encoding step is to perform the encoding of the image in accordance with the encoding condition determined in the determining step, to output the compressed data encoded, to the sending means when the first mode is determined, and to store the compressed data encoded, into the storing means when the second mode is determined.

10. The moving-picture encoding method according to Claim 8, wherein
the determining step determines either of a first mode of outputting the compressed data encoded in the image encoding step, to the sending means and a second mode of outputting the compressed data to the storing means, based on a user's instruction input, and determines such an encoding condition as to turn on the error resilience tool and turn off a filtering process across a boundary between the regions when the first mode is determined, or as to turn on the filtering process across the boundary between the regions and turn off the error resilience tool when the second mode is determined;
and the encoding step is to perform the encoding of the image in accordance with the encoding condition determined in the determining step, to output the compressed data encoded, to the sending means when the first mode is determined, and to store the compressed data encoded, into the storing means when the second mode is determined.

11. A moving-picture encoding method comprising:
an input step of inputting an image by use of image input means;
an image encoding step of dividing the image inputted in the image input step, into a plurality of regions, and encoding the image while selectively turning on or off an error resilience tool of enhancing error resilience of the encoded image in association with the encoding;
a sending step of sending compressed data encoded in the image encoding step, from sending means to the outside, and acquiring a transmission error rate of an external link by the sending means; and
a link determining step of, based on the transmission error rate of the external link acquired in the sending step, determining a first mode when the transmission error rate exceeds a predetermined threshold, or determining a second mode when the transmission error rate is not more than the predetermined threshold, and determining such an encoding condition as to turn on the error resilience tool when the first mode is determined, or as to turn off the error resilience tool when the second mode is determined;
wherein the image encoding step is to perform the encoding of the image in accordance with the encoding condition determined in the link determining step and to output the compressed data encoded, to the sending means.

12. The moving-picture encoding method according to Claim 11, wherein
the link determining step, based on the transmission error rate of the external link acquired in the sending step, determines a first mode when the transmission error rate exceeds a predetermined threshold, or determines a second mode when the transmission error rate is not more than the predetermined threshold, and determines such an encoding condition as to turn on the error resilience tool and turn off a filtering process across a boundary between the regions when the first mode is determined, or as to turn on the filtering process across the boundary between the regions and turn off the error resilience tool when the second mode is determined.

13. A moving-picture encoding program for letting a computer function as:
input means for input of an image;
image encoding means for dividing the image inputted by the image input means, into a plurality of regions and performing encoding thereof, the image encoding means having a function of selectively turning on or off an error resilience tool for enhancing error resilience of the encoded image in association with the encoding;
storing means for storing compressed data encoded by the image encoding means;
sending means for sending the compressed data encoded by the image encoding means, to the outside; and
determining means for determining either of a first mode of outputting the compressed data encoded by the image encoding means, to the sending means and a second mode of outputting the compressed data encoded by the image encoding means, to the storing means, based on a user's instruction input, and for determining such an encoding condition as to turn off the error resilience tool when the second mode is determined;
wherein the image encoding means performs the encoding of the image in accordance with the encoding condition determined by the determining means, and stores the compressed data encoded, into the storing means when the second mode is determined.

14. A moving-picture encoding program according to Claim 13, wherein
the determining means determines either of a first mode of outputting the compressed data encoded by the image encoding means, to the sending means and a second mode of outputting the compressed data encoded by the image encoding means, to the storing means, based on a user's instruction input, and determines such an encoding condition as to turn on the error resilience tool when the first mode is determined, or as to turn off the error resilience tool when the second mode is determined;
and the image encoding means performs the encoding of the image in accordance with the encoding condition determined by the determining means, outputs the compressed data encoded, to the sending means when the first mode is determined, and stores the compressed data encoded, into the storing means when the second mode is determined.

15. A moving-picture encoding program according to Claim 13, wherein
the determining means determines either of a first mode of outputting the compressed data encoded by the image encoding means, to the sending means and a second mode of outputting the compressed data to the storing means, based on a user's instruction input, and determines such an encoding condition as to turn on the error resilience tool and turn off a filtering process across a boundary between the regions when the first mode is determined, or as to turn on the filtering process across the boundary between the regions and turn off the error resilience tool when the second mode is determined;
and the image encoding means performs the encoding of the image in accordance with the encoding condition determined by the determining means, outputs the compressed data encoded, to the sending means when the first mode is determined, and stores the compressed data encoded, into the storing means when the second mode is determined.

16. A moving-picture encoding program for letting a computer function as:
input means for input of an image;
image encoding means for dividing the image inputted by the image input means, into a plurality of regions and performing encoding thereof, the image encoding means having a function of selectively turning on or off an error resilience tool for enhancing error resilience of the encoded image in association with the encoding;
sending means for sending compressed data encoded by the image encoding means, to the outside and for acquiring a transmission error rate of an external link; and
link determining means for, based on the transmission error rate of the external link acquired by the sending means, determining a first mode when the transmission error rate exceeds a predetermined threshold, or determining a second mode when the transmission error rate is not more than the predetermined threshold, and for determining such an encoding condition as to turn on the error resilience tool when the first mode is determined, or as to turn off the error resilience tool when the second mode is determined;
wherein the image encoding means performs the encoding of the image in accordance with the encoding condition determined by the link determining means, and outputs the compressed data encoded, to the sending means.

17. A moving-picture encoding program according to Claim 16, wherein
the link determining means, based on the transmission error rate of the external link acquired by the sending means, determines a first mode when the transmission error rate exceeds a predetermined threshold, or determines a second mode when the transmission error rate is not more than the predetermined threshold, and determines such an encoding condition as to turn on the error resilience tool and turn off a filtering process across a boundary between the regions when the first mode is determined, or as to turn on the filtering process across the boundary between the regions and turn off the error resilience tool when the second mode is determined.
